# EUROPEAN PATENT SPECIFICATION

(11) **EP 3 432 893 B1**
(45) Date of publication and mention of the grant of the patent: **26.10.2022**
(21) Application number: 17771220.5
(22) Date of filing: 24.03.2017
(51) Int. Cl.: C08L 33/12, C08L 51/04, B29C 70/02, C08F 2/22, C08F 220/14

(54) **ENHANCED MELT STRENGTH ACRYLIC FORMULATION**
ACRYLFORMULIERUNG MIT VERBESSERTER SCHMELZFESTIGKEIT
FORMULATION ACRYLIQUE AYANT UNE RÉSISTANCE AMÉLIORÉE À L'ÉTAT FONDU

(30) Priority: 25.03.2016 US 201662313276 P
(43) Date of publication of application: 30.01.2019
(73) Proprietor: Trinseo Europe GmbH, 8810 Horgen (CH)
(72) Inventor: CHERIAN, Zeena, Exton, Pennsylvania 19341 (US); BARSOTTI, Robert J., Newtown Square, Pennsylvania 19073 (US); YOCCA, Kevin R., Schwenksville, Pennsylvania 19473 (US); LYONS, Jason M., King of Prussia, Pennsylvania 19406 (US)
(74) Representative: SSM Sandmair
(86) International application number: PCT/US2017/023982
(87) International publication number: WO 2017/165743

(56) References cited:
- EP-A1- 1 152 033
- EP-A2- 0 458 520
- EP-A2- 1 153 936
- WO-A1-2009/108469
- WO-A2-00/78863
- JP-A- 2015 089 895
- JP-B2- 5 527 252
- US-A- 5 055 529
- US-A1- 2003 065 097
- US-A1- 2009 093 560
- US-A1- 2010 075 088
- US-A1- 2011 160 383
- US-A1- 2011 160 383
- US-A1- 2012 175 818
- US-A1- 2012 208 963
- US-B1- 6 784 230
- US-B1- 8 299 139
- NAFAA MEKHILEF ET AL: "Effect of high molecular weight acrylic copolymers on the viscoelastic properties of engineering resins", JOURNAL OF VINYL AND ADDITIVE TECHNOLOGY, vol. 12, no. 3, 1 January 2006 (2006-01-01), pages 143-150, XP055693008, US ISSN: 1083-5601, DOI: 10.1002/vnl.20083
- Chuen-shyong Chou ET AL: "Applications for Modification of Plastic Materials" In: "Polymer Dispersions and Their Industrial Applications", 11 April 2002 (2002-04-11), Wiley-VCH Verlag, XP055770517, ISBN: 978-3-527-60058-8 vol. 355, pages 355-382, DOI: 10.1002/3527600582.ch14,

## Description

### FIELD OF THE INENTION

The invention relates to an acrylic formulation having a thermoplastic matrix and 5-15 percent by weight of a very high molecular weight acrylic processing aid, with a weight average molecular weight of 10,000,000 Daltons or greater. The formulation has a high melt strength, yet is processable under typical melt processing conditions. The formulation is useful for forming melt-processed products, including extruded products such as extruded sheet, foamed products, co-extruded profiles, blown films, and other objects typically formed by a heat processing operation. The invention is especially useful with an acrylic matrix, such as Plexiglas^{®} and Solarkote^{®} resins from Arkema Inc.

### BACKGROUND OF THE INVENTION

Thermoplastics are highly versatile polymers which are easily melt-processed into many different shapes, such as profiles, sheets, rods; molded and blow molded into films and objects; and extruded or co-extruded over many other thermoplastic substrates.

Acrylic polymers are a specific class of thermoplastics that are well known for their clarity, surface gloss and weather resistance.

The melt strength of a thermoplastic polymer formulation is a key factor in the success of many melt-process operations. In a foam, higher melt strength prevents uncontrolled expansion of the foam cells, to provide a small, uniform cell size. Higher melt strength also prevents a foam from collapsing prior to cooling, and locks in the foam structure. In other melt-processing operations, the high melt strength allows the pulling of a hot, extruded solid or foamed material through sizing or calibrating equipment. When co-extruding a thermoplastic, high melt strength provides the polymer melt with integrity, so a continuous material is formed without gaps.

One way to increase the melt strength of a polymer formulation is to increase the average molecular weight of the polymer. While this approach results in a high melt strength, the melt viscosity can quickly increase to the point that the melt is too thick to process in typical melt processing equipment. Higher melt strength is also known to result from the presence of the higher degree of long chain branching and network/cross-linked structures that can be found in the very high molecular weight process aids. Long chain branching can be introduced in polymers via irradiation or by modification of the polymerization process.

Melt processing aids, which are high molecular weight compatible polymers, have been used in the PVC industry (US 2009/0093560) to increase the melt strength of a PVC formulation.

In the paper "Effect of High Molecular Weight Acrylic Copolymers on the Viscoelastic Properties of Engineering Resins", Journal of Vinyl & Additive Technology - 2006, p 143-150, N. Mekhilef et al. measured the effects of acrylic process aids of 2.5 to 4.9 million Daltons on acrylic and polycarbonate formulations. The present invention uses acrylic process aids at much higher molecular weights, which allows for a lower usage of the process aid. The lower usage of a process aid leads to less negative effects on mechanical properties such as modulus and hardness of articles made with Applicant's formulation.

EP 1 152 033 A1 discloses a polymeric composition comprising an acrylic matrix and from 1 to 40 weight percent of a processing aid polymer with a molecular weight of greater than 1 million g/mol.

There is a need for a high melt strength acrylic formulation having a low enough melt viscosity that allows for processing under typical melt-processing conditions.

Surprisingly, it has now been found that low levels of very high molecular weight acrylic processing aids can be added to an acrylic matrix to significantly increase the melt strength of the acrylic formulation, with little or no increase in melt viscosity - allowing the high melt strength formulation to be melt processed in typical equipment under typical conditions. The high molecular weight acrylic processing aids are miscible with the acrylic matrix. The very high molecular weight acrylic processing aids have a molecular weight of greater than 5 million Daltons. The very high molecular weight acrylic processing aid formulation, in which the processing aid can be used at lower levels, has a minimal effect on mechanical properties such as modulus and hardness in articles made with Applicant's formulation. Due to the lower use levels and the shear thinning behavior of the very high molecular weight process aid with high polydispersity, the viscosity at typical processing conditions can be minimally affected.

### SUMMARY OF THE INVENTION

The invention is set out by the appended independent claims. The dependent claims describe advantageous embodiments.

The invention relates to a high melt strength acrylic formulation comprising:
a) an acrylic matrix comprising an acrylic polymer;
b) 5 to 15 weight percent based on the overall formulation of a very high

molecular weight acrylic process aid containing at least 50 weight percent of methyl
methacrylate monomer units, and optionally comonomers up to 50 weight percent,
wherein said very high molecular weight acrylic process aid has a molecular weight of 10 million g/mol (Daltons) or greater, as measured by GPC.

The invention further relates to a high strength acrylic formulation in which the matrix is may optionally be impact-modified.

The invention further relates to articles that are made from the high impact strength acrylic formulation, and also to melt processes for forming those articles.

### BRIEF DESCRIPTION OF THE DRAWINGS

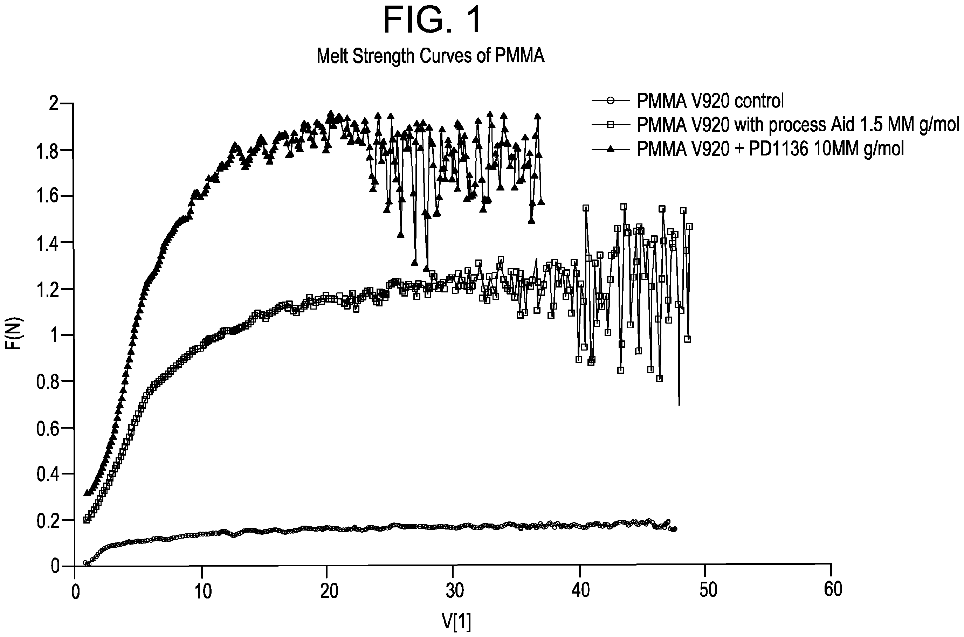

Figure 1: shows the increase of the melt strength of a PMMA matrix formulation having a lower molecular weight process aid (1.5 million g/mol) compared to a PMMA matrix formulation having a very high (10 million g/mol) process aid.
Figure 2: shows the effect of enhanced melt strength on the strain hardening behavior and transient extensional viscosity increase for a formulation of the invention.
Figure 3: shows the effects on the shear rates of formulations of the invention.

### DETAILED DESCRIPTION OF THE INVENTION

The invention relates to an acrylic formulation having a high melt strength, yet where the formulation is processable under typical melt-processing conditions. The formulation contains from 5 to 15 weight percent of a very high molecular weight acrylic polymer process aid, and a matrix acrylic polymer, that is optionally impact modified.

"Copolymer" is used to mean a polymer having two or more different monomer units. "Polymer" is used to mean both homopolymer and copolymers. Polymers may be straight chain, branched, star, comb, block, or any other structure. The polymers may be homogeneous, heterogeneous, and may have a gradient distribution of co-monomer units. All references cited are incorporated herein by reference. As used herein, unless otherwise described, percent shall mean weight percent. Molecular weight is a weight average molecular weight as measured by GPC. In cases where the polymer contains some cross-linking, and GPC cannot be applied due to an insoluble polymer fraction, soluble fraction / gel fraction or soluble faction molecular weight after extraction from gel is used.

### Acrylic Process Aid

The acrylic polymer process aids of the invention are very high molecular weight acrylic polymers. Other polymers miscible with polymethyl methacrylate may also be used in conjunction with the high molecular weight acrylic polymer, including but not limited to polylactic acid and polyvinylidne fluoride. By "very high molecular weight" is meant that the polymers have a weight average molecular weight of 10 million Dalton or greater.

The acrylic process aid preferably contains at least 50 weight percent of methyl methacrylate monomer units, and optionally comonomers, up to 50 weight percent. The methyl methacrylate monomer units, make up from greater than 50 to 100 percent of the monomer mixture, preferably from 70 to 100 weight percent, and more preferably from 80 to 100 weight percent. 0 to less than 50 weight percent of other acrylate and methacrylate monomers or other ethylenically unsaturated monomers, included but not limited to, styrene, alpha methyl styrene, acrylonitrile, and crosslinkers at low levels may also be present in the monomer mixture. Suitable acrylate and methacrylate comonomers include, but are not limited to, methyl acrylate, ethyl acrylate and ethyl methacrylate, butyl acrylate and butyl methacrylate, iso-octyl methacrylate and iso-octyl acrylate, lauryl acrylate and lauryl methacrylate, stearyl acrylate and stearyl methacrylate, isobornyl acrylate and isobornyl methacrylate, methoxy ethyl acrylate and methoxy methacrylate, 2-ethoxy ethyl acrylate and 2-ethoxy ethyl methacrylate, and dimethylamino ethyl acrylate and dimethylamino ethyl methacrylate monomers. (Meth) acrylic acids such as methacrylic acid and acrylic acid can be useful for the monomer mixture. In addition to carboxyl functionality, other functionality can be added to the high molecular weight acrylic process aid through functional comonomers, including epoxy (such as glycidyl methacrylate), hydroxyl, and anhydride functional groups. Functional monomer units (monomer units having a functional group) can be present at up to 70 weight percent of the acrylic polymer, preferably up to 50 weight percent.

Most preferably the acrylic polymer is a copolymer having 70 - 99.5 weight percent and more preferably 80 to 99 percent of methyl methacrylate units and from 0.5 to 30 weight percent of one or more C₁₋₈ straight or branched alkyl acrylate units.

In one embodiment, the polydispersity index of the high molecular weight acrylic process aid is in the range of 1.5 to 50, preferably from 2 to 40, and most preferably from 3 to 30.

The high molecular weight acrylic process aid has a Tg of from -60 to 140°C, preferably from 0 to 120°C.

The acrylic polymer can be an alloy with one or more compatible polymers, including ASA, PVDF and PLA. Preferred alloys are PMMA/polyvinylidene fluoride (PVDF) alloys, and PMMA/polylactic acid (PLA) alloys. The alloy contains 20 to 99 weight percent, preferably 50 to 95 weight percent, and more preferably 60-90 weight percent of the thermoplastic matrix, and 5 to 40 weight percent, preferably 10 to 30 weight percent of the compatible polymer.

While the high molecular weight acrylic process aid can be formed by any known polymerization process, such as emulsion, suspension, solution and reverse emulsion polymerization, emulsion polymerization is the preferred process for producing the very high molecular weight acrylic polymer.

### Acrylic polymer matrix

The polymer matrix of the invention is composed of one or more acrylic polymers. As used herein, the acrylic polymer matrix is meant to include polymers, and copolymers having two or more different monomer units that are formed from alkyl methacrylate and alkyl acrylate monomers, and mixtures thereof. The alkyl methacrylate monomer is preferably methyl methacrylate, which may make up from greater than 50 to 100 percent of the monomer mixture, preferably from 70 to 100 weight percent, and more preferably from 80 to 100 weight percent. 0 to less than 50 weight percent of other acrylate and methacrylate monomers or other ethylenically unsaturated monomers, included but not limited to, styrene, alpha methyl styrene, acrylonitrile, and crosslinkers at low levels may also be present in the monomer mixture. Suitable acrylate and methacrylate comonomers include, but are not limited to, methyl acrylate, ethyl acrylate and ethyl methacrylate, butyl acrylate and butyl methacrylate, iso-octyl methacrylate and iso-octyl acrylate, lauryl acrylate and lauryl methacrylate, stearyl acrylate and stearyl methacrylate, isobornyl acrylate and isobornyl methacrylate, methoxy ethyl acrylate and methoxy methacrylate, 2-ethoxy ethyl acrylate and 2-ethoxy ethyl methacrylate, and dimethylamino ethyl acrylate and dimethylamino ethyl methacrylate monomers. (Meth) acrylic acids such as methacrylic acid and acrylic acid can be useful for the monomer mixture. In addition to carboxyl functionality, other functionality can be added to the high molecular weight acrylic process aid through functional comonomers, including epoxy (such as glycidyl methacrylate), hydroxyl, and anhydride functional groups. Functional monomer units (monomer units having a functional group) can be present at up to 70 weight percent of the acrylic polymer, preferably up to 50 weight percent.

Most preferably the acrylic polymer is a copolymer having 70 - 99.5 weight percent and more preferably 80 to 99 percent of methyl methacrylate units and from 0.5 to 30 weight percent of one or more C₁₋₈ straight or branched alkyl acrylate units.

The acrylic polymer can be an alloy with one or more compatible polymers, including ASA, PVDF and PLA. Preferred alloys are PMMA/polyvinylidene fluoride (PVDF) alloys, and PMMA/polylactic acid (PLA) alloys The alloy contains 2 to 95 weight percent, preferably 5 to 90 weight percent, and more preferably 20-80 weight percent of the PMMA homopolymer or copolymer, and 5 to 98 weight percent, preferably 10 to 95 weight percent and more preferably 20 to 80 weight percent of the compatible polymer.

The acrylic polymer matrix may contain additives, including impact modifiers, and other additives typically present in polymer formulations, including but not limited to, stabilizers, plasticizers, fillers, coloring agents, pigments, dyes, antioxidants, antistatic agents, surfactants, toner, refractive index matching additives, matting agents, cross-linked polymer beads, additives with specific light diffraction, light absorbing, or light reflection characteristics, and dispersing aids. In one embodiment, an additive is provided to help prevent degradation of the composition upon exposure to radiation, such as high levels of UV radiation or gamma radiation. Useful radiation stabilizers include, but are not limited to poly(ethylene glycol), poly(propylene glycol), butyl lactate, and carboxylic acids such as lactic acid, oxalic acid, acetic acid, or a mixture thereof. For foaming, a chemical blowing agent, such as monosodium citrate may be incorporated directly into the thermoplastic formulation, especially in a compounding step below the activation temperature of the blowing agent, or dry blended into the formulation immediately before foam extrusion.

Useful impact modifiers include block copolymers, graft copolymers, and core/shell impact modifiers that are refractive-index matched to the matrix polymer. In a preferred embodiment, the impact modifier comprises at least 50 weight percent of acrylic monomer units. The impact modifier may be present at a level of from 0 to 80 weight percent, preferably 5 to 45, and more preferably from 10 to 30 weight percent, based on the total layer of matrix polymer and all additives. The level of impact modifier can be adjusted to meet the toughness needs for the end use of the composition. Core-shell impact modifiers are multi-stage, sequentially-produced polymer having a core/shell particle structure of at least two layers. In one embodiment, the core-shell impact modifier has a soft (elastomeric) core, and a hard shell (greater than a Tg of 20°C). Preferentially, the core-shell modifier comprises three layers made of a hard core layer, one or more intermediate elastomeric layers, and a hard shell layer. Preferably the impact modifier is a core-shell structure, in which the shell contains at least 50 weight percent of methyl methacrylate monomer units. In one embodiment, the core-shell impact modifier has a hard core (with a Tg greater than 30°C, and more preferably greater than 50°C). In one embodiment, the core-shell impact modifier is made entirely of acrylic monomer units.

### Processing

The acrylic matrix polymer, high molecular weight acrylic processing aid, and optional impact modifiers and other additives are blended in the melt. Two or more of the components of the thermoplastic formulation may first be dry blended, then melt blended. In one embodiment, the high molecular weight acrylic polymer, acrylic matrix polymer and optionally impact modifier are melt blended together and formed into pellets. The pellets are then added with other components, such as dyes, fillers, and blowing agents at the melt processer operation.

In one embodiment, heat compounding can be accomplished by typical twin screw extrusion into an acrylic formulation. Single screw extruders, and extruders of other designs are also contemplated by the invention

In another embodiment, emulsions of one or more of the process aids, acrylic matrix polymer and/or impact modifier can be blended as liquid dispersions, and the blend can be dried, such as by spray drying, coagulation, or freeze drying, to form a powder blend. The powder blend can then be further compounded with other components of the acrylic formulation either by dry blending or melt blending. Powder-powder blending is contemplated. An intermediate step, in which the spray-dried powder(s) are extrusion melt compounded into pellets for further melt compounding is also contemplated.

Typical melt processing operations in which the high melt strength acrylic formulation of the invention, having a manageable melt viscosity may be useful include, but are not limited to, extrusion, co-extrusion, injection molding, compression molding, film extrusion, and blow molding operations. The very high molecular weight, very high polydispersity formulation of the invention undergoes significant shear thinning, so its effect on high shear viscosity will be minimal. Process aids of the invention having higher levels of long chain branching can more effectively increase the melt strength.

### Uses:

The acrylic formulations of the invention are useful in melt-processing applications that can benefit from a high melt strength with little increase in melt viscosity. These include, but are not limited to foams, profile coextrusion, thermoforming, and melt blown films. One of ordinary skill in the art, based on the description and examples provided, can easily imagine other processes that can benefit from a high melt strength, low melt viscosity acrylic formulation.

In a foam process, a chemical or gaseous foaming agent is added to the polymer melt, and that melt expands upon exiting the extruder. A high melt strength formulation provides several advantages in a foaming operation. The high melt strength provides control over the expansion of the individual cells, allowing for a more uniform cell size, and smaller cell size. Die swell of the foam is also better controlled. The high melt strength also helps to prevent the collapse of the cells, once formed. Further, the extruded foam can be more easily sized and/or calendared without deforming the foamed article, due to the higher melt strength of the polymer formulation.

In profile co-extrusion, the higher melt strength acrylic process aid provides more continuity to the thermoplastic formulation, leading to little or no gaps or pit marks in the acrylic layer, and further there is an increase in die swell to better match the coextruded substrate.

Higher melt viscosity of an extruded thermoplastic decreases the amount of sag for rods, sheets, and other articles upon leaving the die, and also less sagging for acrylic layers in a coextrusion.

Higher melt viscosity acrylic formulations allow for better control in a blown-film process, assuring a continuous thin film, without defects.

### EXAMPLES

### Example 1:

10 weight percent of PD-1136, an acrylic process aid with a weight average molecular weight of about 10 million Dalton (Arkema Inc.) is melt compounded in a twin screw extruder with PLEXIGLAS V045, a non-impact modified acrylic from Arkema Inc.. A master blend blowing agent of 10% monosodium citrate in 90% polyvinylidene fluoride is homogeneously dry-blended into this acrylic melt immediately prior to foaming. The extrusion of the blend provides an acrylic foam.

### Example 2:

5 to 10 weight percent of PD-1136 is melt compounded in a twin screw extruder into SOLARKOTE H300-103 (Arkema Inc.), which is an impact modified acrylic polymer, and extruded over a thermoplastic olefin substrate as a capstock profile extrusion.

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein.

### Example 3

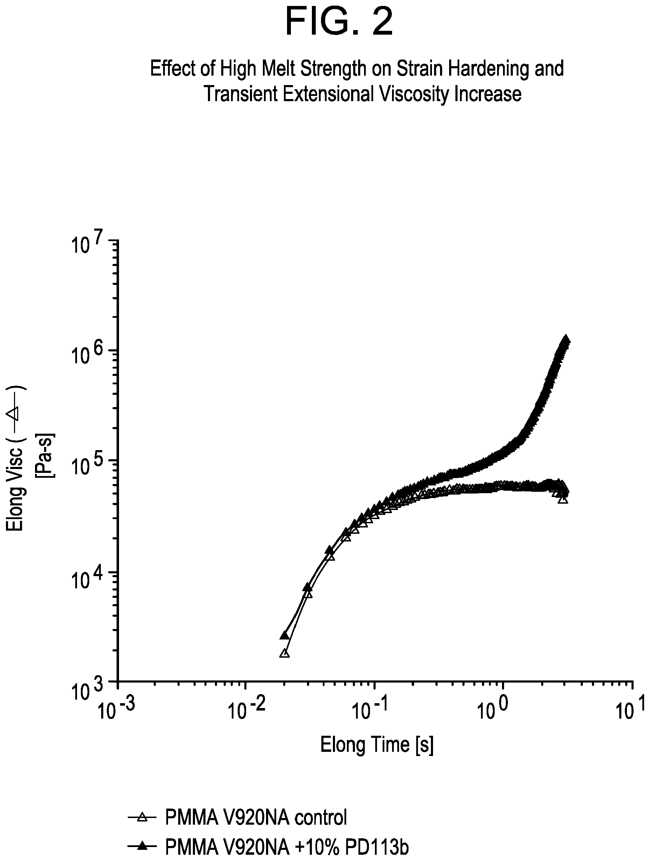

PMMA grade V920 from Arkema Inc. and compounds with 10% PD 1136 having 10 MM g/mol molecular weight have been tested for the effect of enhanced melt strength on strain hardening behavior and transient extensional viscosity increase. The results shown in Figure 2. The effect arising from enhanced melt strength property is increased strain hardening behavior during extensional deformation process that occur in processes such as foaming, thermoforming, blow molding and blown film processes. Rapid increase in viscosity over a short period of time " strain hardening" is associated with higher degree of entanglements from the presence of very high Mw additives and increased polydispersity, and high degree of Long chain branching. Strain hardening helps with stabilization of the cellular structure during foam process which is attributed to the presence of entanglements; consequently macromolecules lose the ability to disentangle quickly enough to follow exponential deformation.

### Example 4

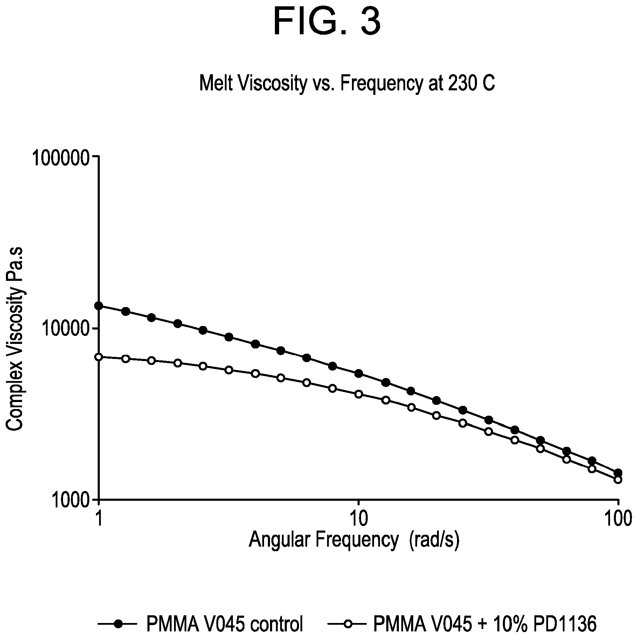

PMMA grade V045 from Arkema Inc. was melt blended with PD1136 at 10%. The oscillatory melt rheology vs. frequency experiments were performed to see the effect on melt viscosity. Table 1 and Figure 3 shows that while the properties such as low shear viscosity, mechanical and creep properties can be enhanced by the addition of very high molecular weight process aid, at processing shear rates (100 rad/s) the viscosity remains largely unaffected

**Table 1: Melt Viscosity of enhanced melt strength PMMA and PMMA control**

| | Complex Viscosity at 230 C (Pa.s) | |
|---|---|---|
| | PMMA V045 control | PMMA V045 + 10% PD 1136 |
| Low frequency at 1 rad/s | 6837 | 13600 |
| High Frequency at 100 rad/s | 1330 | 1420 |

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein.

### Example 5 (non-claimed):

### Acrylic Processing Aid Preparation

Charged into a reactor, with stirring, would be 8600 g of water, 5.23 g of Na₂CO₃ and 38.20 g of sodium lauryl sulfate. The mixture is then stirred until complete dissolution is achieved. Three vacuum-nitrogen purges are then carried out in succession and the reactor left under a slight vacuum. The reactor will then be heated. At the same time, a mixture comprising 44687,2 g of methyl methacrylate and 520,8 g of n-butyl acrylate would be nitrogen-degassed for 30 minutes. Next, this mixture is rapidly introduced into the reactor using a pump. When the temperature of the reaction mixture reaches 55 degrees centigrade, 7.81 g of potassium persulfate dissolved in 98.08 g of water is introduced. The line is rinsed with 50 g of water. The reaction mixture is left to rise in temperature to the exothermal peak. The polymerization is left to reach completion for 60 minutes after the exothermal peak. The reactor is then cooled down to 30 degrees centigrade and the latex removed thereafter. The latex is then isolated by spray drying to obtain a powder.

The molecular weight of the acrylic processing aid described in this example will be about 6 million g/mol., measured as the mass average molecular weight (Mw) of the polymers by size exclusion chromatography (SEC).

Another processing aid with specific anti-sticking composition such, as the one described in the patent EP 0367 198 B1 could also be used in the process. The two processing aids would be co-spray dried using 10 wt. % of the anti-sticking processing aid and 90 wt. % of the processing aid described by the preparation earlier in this example. Co-spray drying as used in this example consists of blending the two acrylic processing aid latexes and then isolating the blend by spray drying. This results in a final powder particle or grain comprised of both processing aids.

In order to prepare the acrylic formulation, 2,000 grams (95 wt. %) of acrylic resin (Plexiglas^{®} VS100, Arkema Inc., King of Prussia, PA) will be added to 105 grams (5 wt. %) of the processing aid combination described above with 90 wt. % of the high molecular weight component and 10 wt. % of the anti-sticking processing aid.

The acrylic formulation would be melt compounded in a twin screw extruder in order to homogenize the thermoplastic matrix and processing aids. The acrylic formulation would have both high melt strength and improved anti-sticking (better metal release).

## Claims

1. A high melt strength acrylic formulation comprising:
a) an acrylic matrix comprising one or more acrylic polymers;
b) 5 to 15 weight percent based on the overall formulation of a very high molecular weight acrylic process aid containing at least 50 weight percent of methyl methacrylate monomer units, and optionally comonomers up to 50 weight percent, wherein said very high molecular weight acrylic process aid has a weight average molecular weight of 10 million g/mol (Daltons) or greater, as measured by GPC.

2. The high melt strength acrylic formulation of claim 1, wherein said acrylic process aid comprises 50 to 100 weight percent of methyl methacrylate monomer units, and from 0 to 50 weight percent of one or more monomer units selected from the group consisting of (meth)acrylates, styrene, alpha methyl styrene, acrylonitrile, glycidyl methacrylate, and (meth)acrylic acid.

3. The high melt strength acrylic formulation of claim 1, wherein said acrylic process aid comprises up to 50 weight percent of functional monomer units, said functionality is chosen from carboxylic, epoxy, hydroxyl and anhydride functional groups.

4. The high melt strength acrylic formulation of claim 1, wherein said acrylic process aid is a copolymer having 70 - 99.5 weight percent of methyl methacrylate units and from 0.5 to 30 weight percent of one or more C₁₋₈ straight or branched alkyl acrylate units.

5. The high melt strength acrylic formulation of claim 1, wherein said acrylic matrix polymer comprises from 50 to 100 weight percent of methyl methacrylate monomer units, and from 0 to 50 weight percent of one or more monomer units selected from the group consisting of (meth)acrylates, styrene, alpha methyl styrene, acrylonitrile, and (meth)acrylic acid.

6. The high melt strength acrylic formulation of claim 1, wherein said acrylic matrix further comprises from 2 to 95 weight percent of one or more compatible polymers, based on the weight of the polymers in the acrylic matrix, wherein said compatible polymer is selected from the group consisting of polylactic acid and polyvinylidene fluoride.

7. The high melt strength acrylic formulation of claim 6, wherein said acrylic matrix comprises 20-80 weight percent of the PMMA homopolymer or copolymer and 5 to 98 weight percent of the compatible polymer based on acrylic matrix comprising the one or more acrylic polymers.

8. The high melt strength acrylic formulation of claim 1, wherein said acrylic matrix further comprises from 5 to 45 weight percent of one or more impact modifiers comprising at least 50 weight percent of acrylic monomer units, preferably from 10 to 30 weight percent, based on matrix polymer.

9. The high melt strength acrylic formulation of claim 8, wherein said impact modifiers are core-shell impact modifiers having a shell comprising at least 50 weight percent methyl methacrylate monomer units, and a hard core with a Tg greater than 30°C.

10. The high melt strength acrylic formulation of claim 8, wherein said impact modifiers are core-shell impact modifiers having a shell comprising methyl methacrylate monomer units, and a soft core with a Tg of less than -20°C.

11. The high melt strength acrylic formulation of claim 1, wherein said high molecular weight process aid has a polydispersity index of from 1.5 to 50, preferably from 2 to 40, and most preferably from 3 to 30.

12. The high melt strength acrylic formulation of claim 1, wherein said acrylic polymer matrix further comprises at least one additive selected from the group consisting of stabilizers, plasticizers, fillers, coloring agents, pigments, dyes, antioxidants, antistatic agents, surfactants, toner, refractive index matching additives, matting agents, cross-linked polymer beads, additives with specific light diffraction, light absorbing, or light reflection characteristics, and dispersing aids.

13. An article formed from the high melt strength acrylic formulation of claim 1.

14. The article of claim 13, wherein said article is a sheet, film, rod, profile, or co-extruded sheet, film, profile, or co-extruded capstock over a substrate.

15. The article of claim 13, wherein said article comprises a foam.

16. A process for forming the article of claim 13, wherein said process is selected from the group consisting of extrusion, co-extrusion, injection molding, compression molding, film extrusion, and blow molding.

## Patentansprüche

1. Acrylformulierung mit hoher Schmelzfestigkeit, umfassend:
a) eine Acrylmatrix, die ein oder mehrere Acrylpolymere umfasst;
b) 5 bis 15 Gewichtsprozent bezogen auf die Gesamtformulierung eines Acrylverarbeitungshilfsmittels mit sehr hohem Molekulargewicht, das wenigstens 50 Gewichtsprozent Methylmethacrylat-Monomereinheiten und optional Comonomere bis zu 50 Gewichtsprozent enthält, wobei das Acrylverarbeitungshilfsmittel mit sehr hohem Molekulargewicht ein gewichtsmittleres Molekulargewicht von 10 Millionen g/mol (Dalton) oder mehr, gemessen durch GPC, aufweist.

2. Acrylformulierung mit hoher Schmelzfestigkeit nach Anspruch 1, wobei das Acrylverarbeitungshilfsmittel 50 bis 100 Gewichtsprozent Methylmethacrylat-Monomereinheiten und von 0 bis 50 Gewichtsprozent einer oder mehrerer Monomereinheiten umfasst, die aus der Gruppe ausgewählt sind, die aus (Meth)acrylaten, Styrol, Alpha-Methylstyrol, Acrylnitril, Glycidylmethacrylat und (Meth)acrylsäure besteht.

3. Acrylformulierung mit hoher Schmelzfestigkeit nach Anspruch 1, wobei das Acrylverarbeitungshilfsmittel bis zu 50 Gewichtsprozent funktioneller Monomereinheiten umfasst, wobei die Funktionalität aus funktionellen Carboxyl-, Epoxidharz-, Hydroxyl- und Anhydridgruppen ausgewählt ist.

4. Acrylformulierung mit hoher Schmelzfestigkeit nach Anspruch 1, wobei das Acrylverarbeitungshilfsmittel ein Copolymer mit 70 - 99,5 Gewichtsprozent Methylmethacrylateinheiten und von 0,5 bis 30 Gewichtsprozent einer oder mehrerer gerader oder verzweigter C₁₋₈-Alkylacrylateinheiten ist.

5. Acrylformulierung mit hoher Schmelzfestigkeit nach Anspruch 1, wobei das Acrylmatrixpolymer von 50 bis 100 Gewichtsprozent Methylmethacrylat-Monomereinheiten und von 0 bis 50 Gewichtsprozent einer oder mehrerer Monomereinheiten umfasst, die aus der Gruppe ausgewählt sind, die aus (Meth)acrylaten, Styrol, Alpha-Methylstyrol, Acrylnitril und (Meth)acrylsäure besteht.

6. Acrylformulierung mit hoher Schmelzfestigkeit nach Anspruch 1, wobei die Acrylmatrix ferner 2 bis 95 Gewichtsprozent eines oder mehrerer kompatibler Polymere bezogen auf das Gewicht der Polymere in der Acrylmatrix umfasst, wobei das kompatible Polymer aus der Gruppe ausgewählt ist, die aus Polymilchsäure und Polyvinylidenfluorid besteht.

7. Acrylformulierung mit hoher Schmelzfestigkeit nach Anspruch 6, wobei die Acrylmatrix 20-80 Gewichtsprozent des PMMA-Homopolymers oder -Copolymers und 5 bis 98 Gewichtsprozent des kompatiblen Polymers bezogen auf die Acrylmatrix umfasst, die das eine oder die mehreren Acrylpolymere umfasst.

8. Acrylformulierung mit hoher Schmelzfestigkeit nach Anspruch 1, wobei die Acrylmatrix ferner von 5 bis 45 Gewichtsprozent eines oder mehrerer Schlagmodifiziermittel umfasst, die wenigstens 50 Gewichtsprozent Acrylmonomereinheiten, vorzugsweise von 10 bis 30 Gewichtsprozent, bezogen auf das Matrixpolymer umfassen.

9. Acrylformulierung mit hoher Schmelzfestigkeit nach Anspruch 8, wobei die Schlagmodifiziermittel Kern-Schale-Schlagmodifiziermittel mit einer Schale, die wenigstens 50 Gewichtsprozent Methylmethacrylat-Monomereinheiten umfasst, und einem harten Kern mit einer Tg von mehr als 30 °C sind.

10. Acrylformulierung mit hoher Schmelzfestigkeit nach Anspruch 8, wobei die Schlagmodifiziermittel Kern-Schale-Schlagmodifiziermittel mit einer Schale, die Methylmethacrylat-Monomereinheiten umfasst, und einem weichen Kern mit einer Tg von weniger als -20 °C sind.

11. Acrylformulierung mit hoher Schmelzfestigkeit nach Anspruch 1, wobei das Verarbeitungshilfsmittel mit sehr hohem Molekulargewicht einen Polydispersitätsindex von 1,5 bis 50, vorzugsweise von 2 bis 40 und am stärksten bevorzugt von 3 bis 30 aufweist.

12. Acrylformulierung mit hoher Schmelzfestigkeit nach Anspruch 1, wobei die Acrylpolymermatrix ferner wenigstens ein Additiv umfasst, das aus der Gruppe ausgewählt ist, die aus Stabilisatoren, Weichmachern, Füllstoffen, Färbemitteln, Pigmenten, Farbstoffen, Antioxidantien, Antistatika, Tensiden, Tonern, Additiven für die Anpassung des Brechungsindexes, Mattierungsmitteln, vernetzten Polymerkügelchen, Additiven mit spezifischen Lichtbeugungs-, Lichtabsorptions- oder Lichtreflexionseigenschaften und Dispergierhilfsmitteln besteht.

13. Gegenstand, der aus der Acrylformulierung mit hoher Schmelzfestigkeit nach Anspruch 1 ausgebildet ist.

14. Gegenstand nach Anspruch 13, wobei der Gegenstand eine Kunststofffolie, eine Folie, ein Stab, ein Profil oder eine co-extrudierte Kunststofffolie, Folie, ein co-extrudiertes Profil oder eine co-extrudierte Deckschicht über einem Substrat ist.

15. Gegenstand nach Anspruch 13, wobei der Gegenstand einen Schaumstoff umfasst.

16. Verfahren zum Ausbilden des Gegenstands nach Anspruch 13, wobei das Verfahren aus der Gruppe ausgewählt ist, die aus Extrusion, Co-Extrusion, Spritzgießen, Formpressen, Folienextrusion und Blasformen ausgewählt ist.

## Revendications

1. Formulation acrylique à haute résistance à l'état fondu comprenant :
a) une matrice acrylique comprenant un ou plusieurs polymères acryliques ;
b) 5 à 15 % en poids sur la base de la formulation globale d'un adjuvant de fabrication acrylique de très haut poids moléculaire contenant au moins 50 % en poids d'unités monomères de méthacrylate de méthyle, et éventuellement des comonomères jusqu'à 50 % en poids, dans lequel ledit adjuvant de fabrication acrylique de très haut poids moléculaire a un poids moléculaire moyen en poids de 10 millions de g/mol (Daltons) ou plus, tel que mesuré par GPC.

2. Formulation acrylique à haute résistance à l'état fondu selon la revendication 1, dans laquelle ledit adjuvant de fabrication acrylique comprend 50 à 100 % en poids d'unités monomères de méthacrylate de méthyle, et de 0 à 50 % en poids d'une ou plusieurs unités monomères choisies dans le groupe constitué de (méth)acrylates, de styrène, d'alpha méthyl styrène, d'acrylonitrile, de méthacrylate de glycidyle et d'acide (méth)acrylique.

3. Formulation acrylique à haute résistance à l'état fondu selon la revendication 1, dans laquelle ledit adjuvant de fabrication acrylique comprend jusqu'à 50 % en poids d'unités monomères fonctionnelles, ladite fonctionnalité est choisie parmi les groupes fonctionnels carboxylique, époxy, hydroxyle et anhydride.

4. Formulation acrylique à haute résistance à l'état fondu selon la revendication 1, dans laquelle ledit adjuvant de fabrication acrylique est un copolymère ayant 70 à 99,5 % en poids d'unités de méthacrylate de méthyle et de 0,5 à 30 % en poids d'une ou plusieurs unités d'acrylate d'alkyle linéaire ou ramifié en C₁₋₈.

5. Formulation acrylique à haute résistance à l'état fondu selon la revendication 1, dans laquelle ledit polymère de matrice acrylique comprend de 50 à 100 % en poids d'unités monomères de méthacrylate de méthyle, et de 0 à 50 % en poids d'une ou plusieurs unités monomères choisies dans le groupe constitué de (méth)acrylates, de styrène, d'alpha méthyl styrène, d'acrylonitrile et d'acide (méth)acrylique.

6. Formulation acrylique à haute résistance à l'état fondu selon la revendication 1, dans laquelle ladite matrice acrylique comprend en outre de 2 à 95 % en poids d'un ou plusieurs polymères compatibles, sur la base du poids des polymères dans la matrice acrylique, dans laquelle ledit polymère compatible est choisi parmi le groupe constitué d'acide polylactique et de fluorure de polyvinylidène.

7. Formulation acrylique à haute résistance à l'état fondu selon la revendication 6, dans laquelle ladite matrice acrylique comprend 20 à 80 % en poids de l'homopolymère ou copolymère PMMA et 5 à 98 % en poids du polymère compatible sur la base de la matrice acrylique comprenant l'un ou plusieurs polymères acryliques.

8. Formulation acrylique à haute résistance à l'état fondu selon la revendication 1, dans laquelle ladite matrice acrylique comprend en outre de 5 à 45 % en poids d'un ou plusieurs modificateurs d'impact comprenant au moins 50 % en poids d'unités monomères acryliques, de préférence de 10 à 30 % en poids, sur la base du polymère matrice.

9. Formulation acrylique à haute résistance à l'état fondu selon la revendication 8, dans laquelle lesdits modificateurs d'impact sont des modificateurs d'impact noyau-enveloppe ayant une enveloppe comprenant au moins 50 % en poids d'unités monomères de méthacrylate de méthyle, et un noyau dur avec une Tg supérieure à 30 °C.

10. Formulation acrylique à haute résistance à l'état fondu selon la revendication 8, dans laquelle lesdits modificateurs d'impact sont des modificateurs d'impact noyau-enveloppe ayant une enveloppe comprenant des unités monomères de méthacrylate de méthyle, et un noyau mou avec une Tg inférieure à -20 °C.

11. Formulation acrylique à haute résistance à l'état fondu selon la revendication 1, dans laquelle ledit adjuvant de fabrication de haut poids moléculaire a un indice de polydispersité de 1,5 à 50, préférablement de 2 à 40, et le plus préférablement de 3 à 30.

12. Formulation acrylique à haute résistance à l'état fondu selon la revendication 1, dans laquelle ladite matrice polymère acrylique comprend en outre au moins un additif choisi dans le groupe constitué par les stabilisants, les plastifiants, les charges, les agents colorants, les pigments, les colorants, les antioxydants, les agents antistatiques, les tensioactifs, les toners, les additifs d'adaptation d'indice de réfraction, les agents de matage, les billes de polymère réticulé, les additifs avec des caractéristiques spécifiques de diffraction de la lumière, d'absorption de la lumière ou de réflexion de la lumière et des adjuvants de dispersion.

13. Article formé à partir de la formulation acrylique à haute résistance à l'état fondu selon la revendication 1.

14. Article selon la revendication 13, dans lequel ledit article est une feuille, un film, une tige, un profilé ou une feuille co-extrudée, un film, un profilé ou un revêtement co-extrudé sur un substrat.

15. Article selon la revendication 13, dans lequel ledit article comprend une mousse.

16. Procédé de formation de l'article selon la revendication 13, dans lequel ledit procédé est choisi dans le groupe constitué par l'extrusion, la co-extrusion, le moulage par injection, le moulage par compression, l'extrusion de film et le moulage par soufflage.
